# EUROPEAN PATENT SPECIFICATION

(11) **EP 0 595 551 B1**
(45) Date of publication and mention of the grant of the patent: **16.04.1997**
(21) Application number: 93308401.4
(22) Date of filing: 21.10.1993
(51) Int. Cl.: F16L 47/00, C08L 23/16, C08K 5/25, C08K 3/00

(54) **Radiator hose**
Kraftfahrzeug-Kühlwasserschlauch
Tuyau pour radiateur de véhicule

(30) Priority: 21.10.1992 JP 282737/92; 02.12.1992 JP 323029/92
(43) Date of publication of application: 04.05.1994
(73) Proprietor: SUMITOMO CHEMICAL COMPANY LIMITED, Osaka-shi, Osaka 541 (JP)
(72) Inventor: Yamamoto, Keisaku, Ichihara-shi, Chiba 299-01 (JP); Ikeda, Kiyoshi, Ichihara-shi, Chiba 290 (JP); Koshiba, Junichi, Ichihara-shi, Chiba 299-01 (JP)
(74) Representative: Cresswell, Thomas Anthony

(56) References cited:
- EP-A- 0 268 851
- DE-A- 4 140 934
- US-A- 3 888 824
- US-A- 4 077 948

## Description

### FIELD OF THE INVENTION:

The present invention relates to a radiator hose, for example, for automobile engines, and more particularly to a radiator hose made of a vulcanized rubber composition.

### BACKGROUND OF THE INVENTION:

One of materials for radiator hoses conventionally and widely used for radiator hoses is a vulcanized ethylene-α -olefin copolymer rubber such as ethylene-propylene copolymer rubber or ethylene-α -olefin-nonconjugated diene copolymer rubber such as ethylene-propylene-nonconjugated diene copolymer rubber. In this technical field, the rubbers are vulcanized with organic peroxide before being shaped in hoses. A zinc-containing compound such as zinc white (zinc oxide) has been used as an essential ingredient in order to prevent aging of the rubber. However, when a radiator hose is made of a vulcanized rubber composition having a zinc-containing compound, the zinc elutes into a cooling medium and causes troubles in mechanical systems including engines. Furthermore, the zinc increases electric conductivity of the cooling medium to lead to electric corrosion of the hose, until the hose is useless due to cracks appeared and propagated therein.

### SUMMARY OF THE INVENTION:

An object of the present invention is to provide a radiator hose which has excellent age-resisting property. The hose is made of a vulcanized rubber composition. The rubber composition before vulcanization comprises an ethylene-α -olefin copolymer rubber and/or ethylene-α-olefin-nonconjugated diene copolymer rubber as a rubber component without the zinc-containing compound which causes the above described problems.

### DETAILED DESCRIPTION OF THE INVENTION:

The radiator hose of the present invention is made of a vulcanized rubber composition obtained by vulcanization of a rubber composition (R). The rubber composition (R) comprises the following (A) to (C) without zinc-containing compound.
(A) an ethylene-α-olefin copolymer rubber and/or an ethylene- α -olefin-nonconjugated diene copolymer rubber,
(B) at least one compound selected from N,N'-bis[3-(3,5-di-tert-butyl-4-hydroxyphenyl)propionyl]hydrazine, N,N'-dibenzal-(oxalyl dihydrazide) and 2,2'-oxamid-bis[ethyl-3-(3,5-di-tert-butyl-4-hydroxyphenyl)propionate], and
(C) carbon black.

Examples of the α -olefin of the ethylene-α -olefin copolymer rubber and ethylene- α -olefin-non-conjugated diene copolymer rubber (hereinafter referred to "ethylene-α -olefin(-nonconjugated diene) copolymer rubber") are propylene, 1-butene, 1-hexene, 4-methyl-1-pentene, 1-octene and 1-decene. Propylene is preferable.

The nonconjugated diene includes chain nonconjugated dienes such as 1,4-hexadiene, 1,6-octadiene, 2-methyl-1,5-hexadiene, 6-methyl-1,5-heptadiene, 7-methyl-1,6-octadiene; cyclic nonconjugated dienes such as cyclohexadiene, dicyclopentadiene, methyltetrahydoindene, 5-vinylnorbornene, 5-ethylidene-2-norbornene, 5-methylene-2-norbornene, 5-isopropylidene-2-norbornene, 6-chloromethyl-5-isopropenyl-2-norbornene; and trienes such as 2,3-diisopropylidene-5-norbornene, 2-ethylidene-3-isopropylidene-5-norbornene, 2-propenyl-2,2-norbornadiene, 1,3,7-octatriene, 1,4,9-decatoriene. 1,4-hexadiene, dicyclopentadiene and 5-ethylidene-2-norbornene are preferable.

Ethylene content in the ethylene-α -olefin and ethylene-α -olefin-nonconjugated diene copolymer rubbers is usually 30 to 80 wt%, preferably 40 to 70 wt%. When ethylene-α-olefin-nonconjugated diene copolymer rubber is used, iodene value is usually 1 to 40. An oil-extended rubber containing an extending oil may be used as the ethylene-α -olefin copolymer rubber or ethylene-α -olefin-nonconjugated diene copolymer rubber.

In the present invention, the ethylene-α -olefin copolymer rubber and/or ethylene-α -olefin-nonconjugated diene copolymer rubber may be used together with an ethylene (meth)acrylate copolymer. In this case, oil-resistance of the resulting vulcanized rubber composition is further improved. The ethylene (meth)acrylate copolymer means a copolymer containing ethylene and acrylate and/or methacrylate. The acrylates and methacrylates are preferably esters with alcohols of 1-8 carbon atoms. Examples are methyl acrylate, methyl methacrylate, ethyl acrylate, ethyl methacrylate, n-butyl acrylate, n-butyl methacrylate, tert-butyl acrylate, tert-butyl methacrylate, 2-ethylhexyl acrylate and 2-ethylhexyl methacrylate. They may be used each alone or in combination of two or more. The ratio of ethylene/(meth)acrylate is usually 50/50 to 85/15, preferably 58/42 to 80/20, in mole. When the proportion of ethylene is too small, brittle point of the copolymer is high and it sometimes becomes difficult to use the copolymer as an elastomer at low temperatures. When the proportion of ethylene is too large, crystallinity of the copolymer is high until no sufficient elastomeric elasticity is sometimes obtained.

The ethylene-(meth)acrylate copolymer may contain at least one of unsaturated glycidyl esters, acid anhydrides and unsaturated compounds having carboxylic acid group (hereinafter sometimes referred to as "third component"). The unsaturated glycidyl esters include, for example, glycidyl acrylate, glycidyl methacrylate, diglycidyl itaconate, triglycidyl butene-tricarboxylate and glycidyl p-styrenecarboxylate. The acid anhydrides include, for example, maleic anhydride. The unsaturated compounds having carboxylic acid group include, for example, acrylic acid, methacrylic acid, maleic acid and half esters of maleic acid as mentioned in JP46-45085B. Amount of the third component is 0.05 to 5 mol%, preferably 0.1 to 3 mol% on the basis of the total amount of the ethylene and (meth)acrylate.

Furthermore, other comonomers copolymerizable with ethylene may be copolymerized with the ethylene copolymer of the present invention. Examples of the comonomers are isobutylene, styrene and derivatives thereof, vinyl acetate and halogenated olefins such as tetrafluoroethylene and hexafluoropropylene.

The ethylene-(meth)acrylate copolymers have a melt index at 190°C of usually 0.5 to 500 g/10 min., more preferably 0.5 to 50 g/10 min. (JIS K6/91).

Mixing ratio of total of the ethylene-α -olefin copolymer rubber and ethylene-α -olefin-nonconjugated diene copolymer rubber to the ethylene-(meth)acrylate copolymer is preferably 50/50 to 99/1 (weight ratio). If the ratio is too small, tensile strength, heat resistance and permanent compression set of the vulcanized rubber composition sometimes decrease. If the ratio is too large, an improvement in oil-resistance is sometimes insufficient. When an oil-extended rubber is used as the ethylene-α -olefin copolymer rubber or ethylene- α -olefin-nonconjugated diene copolymer rubber, the above ratio is based on the weight of only the polymer components excluding the extending oil. (The same is applied to hereinafter.)

At least one compound selected from the compounds mentioned below is used:
N,N'-bis[3-(3,5-di-tert-butyl-4-hydroxyphenyl)propionyl]hydrazine (the following formula (1)),
N,N'-dibenzal-(oxalyl dihydrazide) (the following formula (2)), and
2,2'-oxamid-bis-[ethyl-3-(3,5-di-tert-butyl-4-hydroxyphenyl)propionate] (the following formula (3):

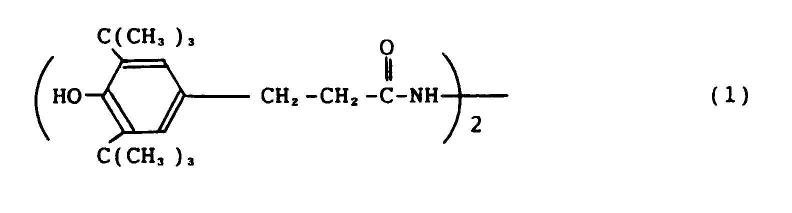

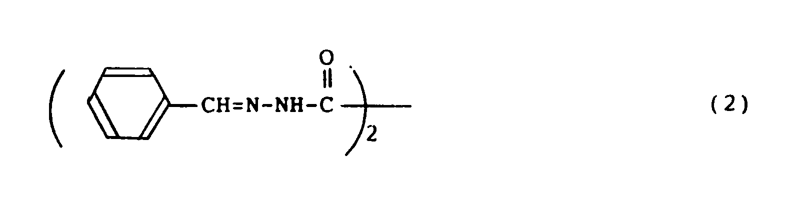

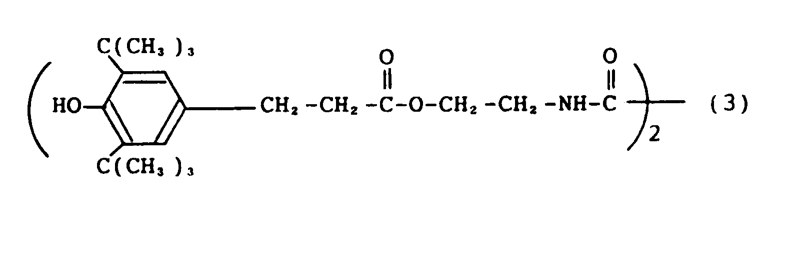

These compounds may be used alone or in combination.

It is noted that no zinc-containing compound is used but at least one compound belonging to the component (B). No serious problems aforementioned due to zinc are encountered and prevention is made against aging, i.e., degradation of vulcanized rubber compositions in high-temperature air or oil with respect to properties such as tensile strength, elongation and hardness.

Amount of the compounds (1) - (3) used is usually 0.1 to 10 parts by weight, preferably 0.3 to 6 parts by weight on the basis of 100 parts by weight in total of all copolymers (hereinafter referred to as "copolymer component") of the ethylene-α -olefin copolymer rubber and ethylene-α -olefin-nonconjugated diene copolymer rubber and, if necessary, the ethylene(meth)acrylate copolymer when this is used. If the amount is too small, age-resisting property may be insufficient. On the other hand, the amount is too large, no more increase in age-resisting property is obtained and it is uneconomical. When two or three compounds are used, the total amount is within the range mentioned above.

Carbon black is essential in order to keep strength and weather-proof of the vulcanized rubber composition at a high level. Carbon black is usually used in an amount of 10 to 200 parts by weight, preferably 40 to 140 parts by weight, every 100 parts by weight of the copolymer component.

Organic peroxides are added to the rubber composition in order to vulcanize the same. As the organic peroxides, any of compounds generally used for crosslinking of rubbers may be used. Examples of the organic peroxides are di-tert-butyl peroxide, tert-butylcumyl peroxide, dicumyl peroxide, α , α -bis(tert-butylperoxyisopropyl)benzene, 2,5-dimethyl-2,5-di(tert-butylperoxy)hexane, 2,5-dimethyl-2,5-di-tert-butylperoxy)hexane-3, 1,1-bis-(tert-butylperoxy)-3,3,5-trimethylcyclohexane, n-butyl-4, 4-bis(tert-butylperoxy)valerate, 2,2-bis(tert-butylperoxy)butane and 2,2-bis(tert-butylperoxy)octane. Amount of the organic peroxide is preferably 1 to 10 parts by weight, more preferably 2 to 6 parts by weight, every 100 parts by weight of the copolymer component. If the amount is too small, cross-linking density is so small that mechanical strength of the vulcanized rubber composition is sometimes insufficient. If the amount is too large, problems such as blowing are sometimes encountered at the time of vulcanization and molding. Furthermore, known cross-linking aids such as p,p'-dibenzoylquinone dioxime, quinone dioxime, triallyl cyanurate, sulfur, ethylene methacrylate, N,N'-m-phenylenebismaleimide, triallyl isocyanurate, trimethylolpropane trimethacrylate and metal acrylate may be used in order to improve cross-linking efficiency at the time of vulcanization with organic peroxides.

A rubber composition which contains the components (A)-(C) mentioned above as well as organic peroxides is mixed by kneaders such as rolls and Bunbary mixer, together with if necessary, anti-oxidant, vulcanization accelerators, processing aids, stearic acid, reinforcing agent, filler, plasticizer and softening agent and the like excluding ones which have zinc-containing compound to obtain a vulcanizable rubber composition. Vulcanization is generally carried out at a temperature of 120°C or higher, preferably 150 to 220°C, for about 1 to 30 minutes. Any of press vulcanization, steam vulcanization and hot-air vulcanization may be applied.

The vulcanized rubber composition is shaped to a radiator hose by a usual method.

### EXAMPLE

The present invention is illustrated by the following examples.

### Examples 1 to 4, Comparative Examples 1 to 12 and Reference Example 1

As the copolymer component, a mixture of 95 parts by weight of ethylene-propylene-5-ethylidene-2-norbornene copolymer rubber ("E505" manufactured by Sumitomo Chemical Co., Ltd., Moony viscosity ML₁₊₄ 100°C 75, ethylene content 49 wt%, iodine value 24), 5 parts by weight (based on the amount excluding extending oil) of oil extended ethylene-propylene-5-ethylidene-2-norbornene copolymer rubber ("E601F" manufactured by Sumitomo Chemical Co., Ltd., Moony viscosity ML₁₊₄ 121°C 63, ethylene content 57 wt%, iodine value 12, extending oil content 70 phr) was used. 100 Parts by weight of the ethylene- α -olefin-nonconjugated diene copolymer rubber, given amounts of compounds labeled "added compounds" of Tables 1 to 3, 97 parts by weight of carbon black ("Asahi 50HG" manufactured by Asahi Carbon Co., Ltd.), 29 parts by weight of paraffinic oil ("Sunpar 2280" manufactured by Sun-Oil Co., Ltd.), 2 parts by weight of processing aids ("Struktol WB212" manufactured by Schill & Seilacher Co., Ltd.), 2 parts by weight of vulcanization accelerator ("Acrylic ester ED" manufactured by Mitsubishi-Kasei Corporation) and 2 parts by weight of stearic acid were kneaded by a 1500 ml Banbury mixer adjusted to 90°C at a rotor velocity of 60 rpm for 5 minutes. Then, the mixture was kneaded together with 7 parts by weight of dicumyl peroxide (40 wt%) ("DCP" manufactured by Nippon Oil & Fats Co., Ltd.) fed through an eight inch open roll mill, until a rubber composition was obtained. Then, the rubber composition was subjected to press curing (170°C x 15 minutes) to obtain a vulcanized rubber composition. The composition was shaped to a radiator hose. Evaluation of the hose was conducted in accordance with JIS K 6301. Evaluation of heat-resistance was conducted by measuring the change of physical properties while the hose was left to stand in air of 160°C for 94 hours. Evaluation of oil-resistance was conducted by measuring the change of physical properties while the hose was left to stand in oil of ASTM No. 2 of 100°C for 22 hours. The results are shown in Tables 1 to 3.

### Examples 5-9

Example 1 were repeated except that ethylenepropylene-ethylidenenorbornene copolymer rubber ("E567" manufactured by Sumitomo Chemical Co., Ltd., Mooney viscosity ML₁₊₄ 100°C 50, ethylene content 50% by weight, iodine value 5), ethylene-propylene-ethylidene-norbornene copolymer rubber ("E601F" manufactured by Sumitomo Chemical Co., Ltd., Mooney viscosity ML₁₊₄ 121°C 63, ethylene content 57% by weight, iodine value 12, extending oil content 70 phr) and ethylene-methyl acrylate copolymer ("EMA2152" manufactured by Sumitomo Chemical Co., Ltd., ethylene/methyl acrylate molar ratio 68/32, JIS K6791 melt index (190°C) 7) were used as copolymer components at the ratio as shown in Table 4. The conditions and results are shown in Table 4.

The Comparative Example 1 which has no zinc oxide is inferior in heat-resistance to the Reference Example 1 which has zinc oxide. On the contrary, all of the Examples according to the present invention which contain the specific compounds mentioned above and no zinc oxide exhibit excellent heat-resistance and oil-resistance. On the other hand, the Comparative Examples 2 to 12 which contain other compounds than those specified in B mentioned above and no zinc oxide are inferior in the heat-resistance and oil-resistance.

Examples 6-9 which additionally contain ethylene-methyl acrylate show remarkable improvement in oil-resistance.

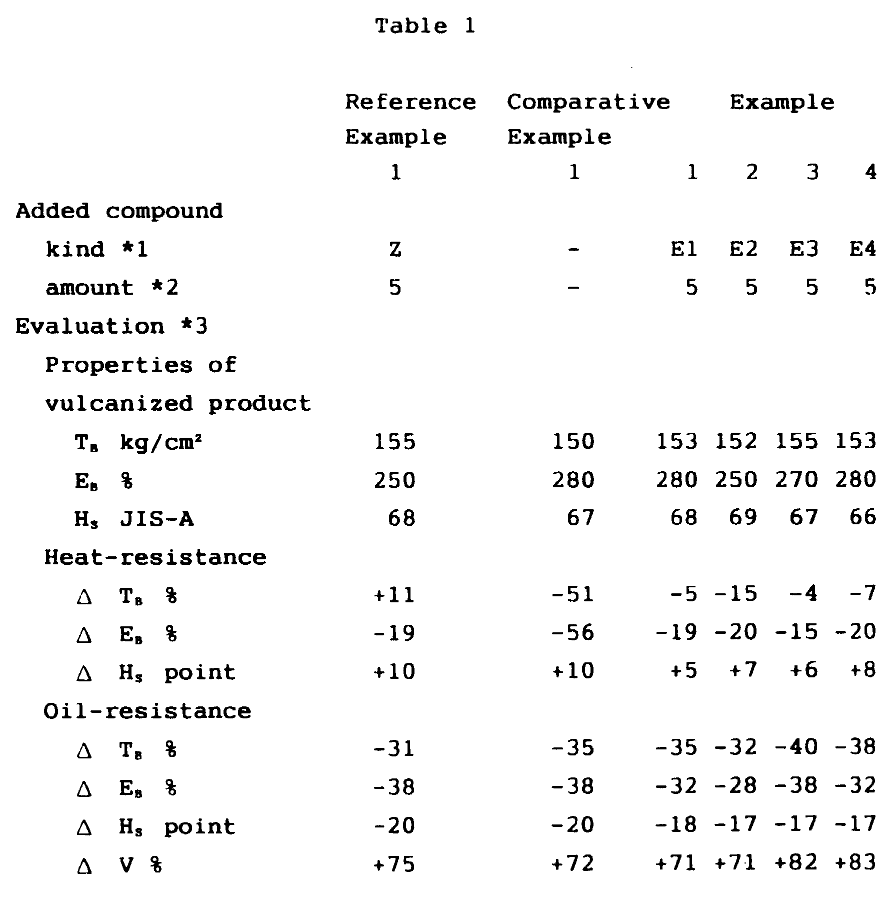

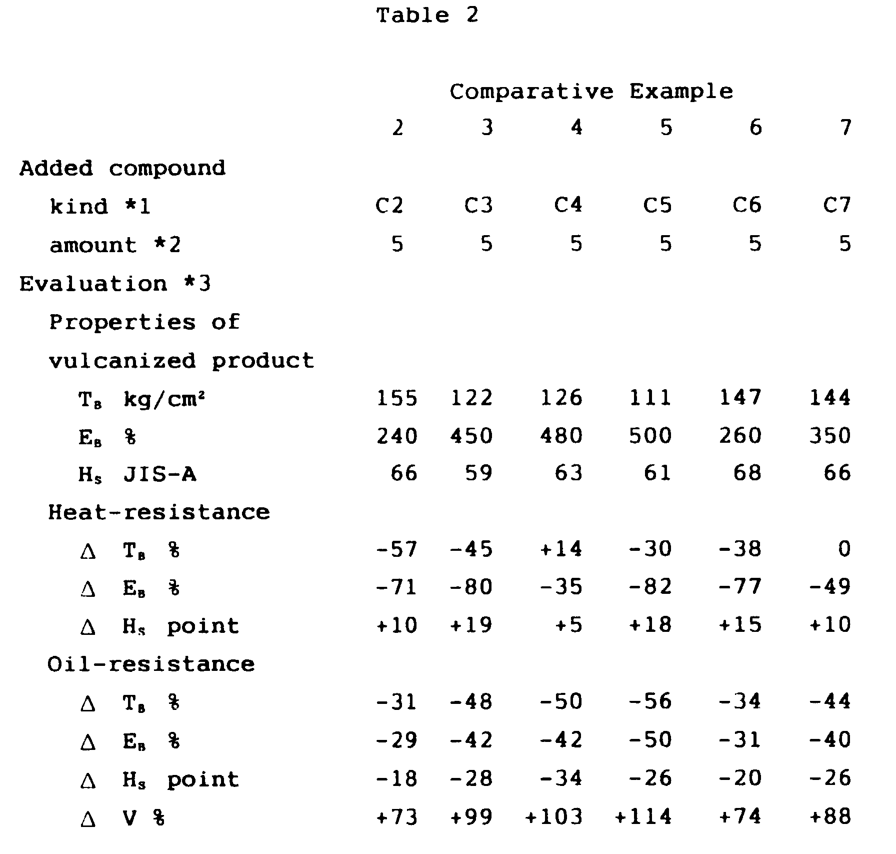

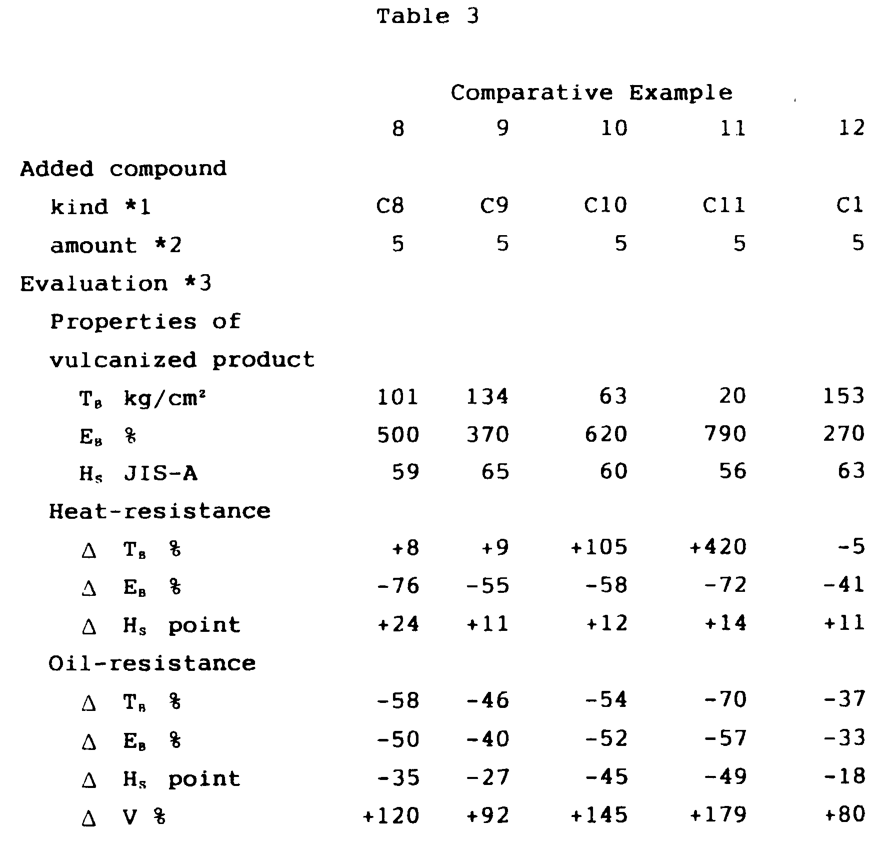

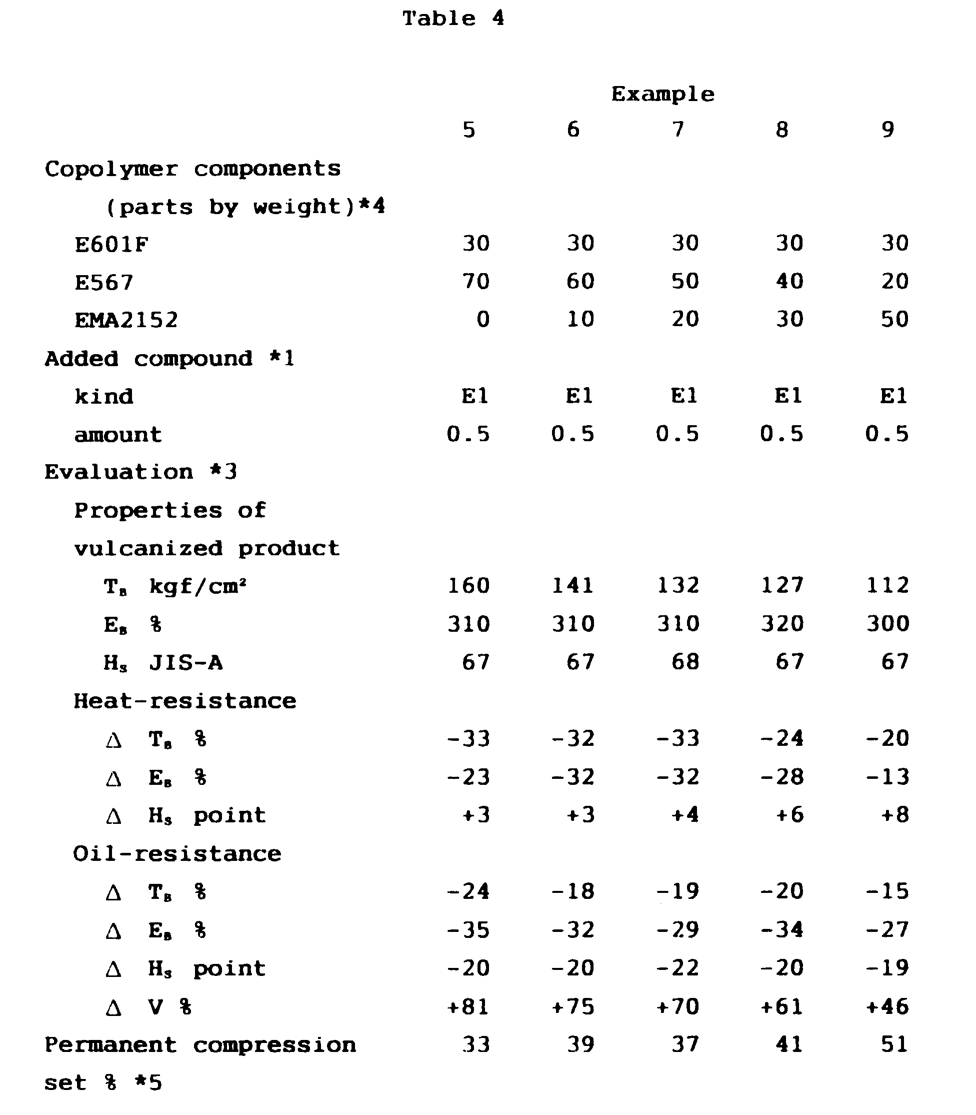

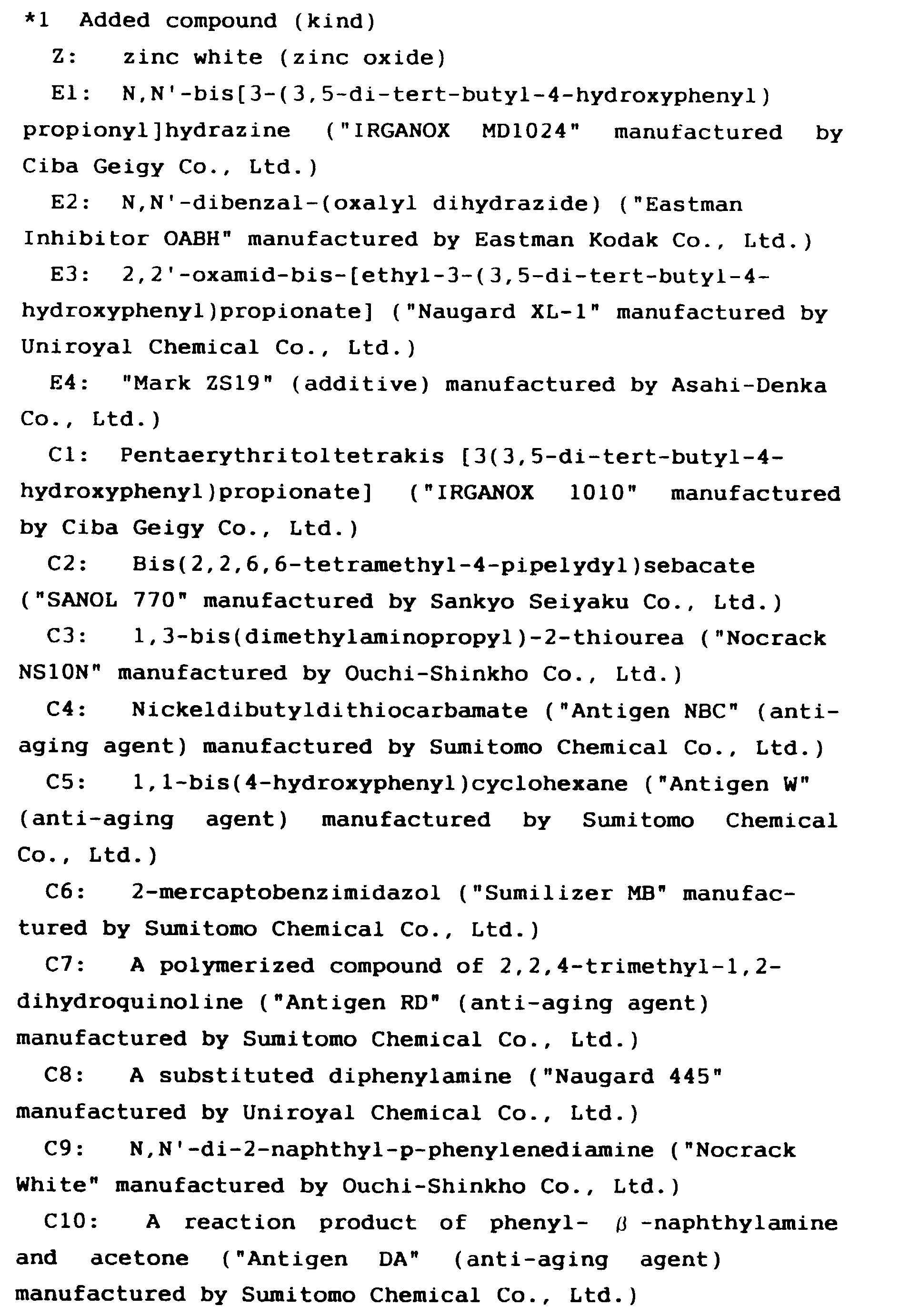

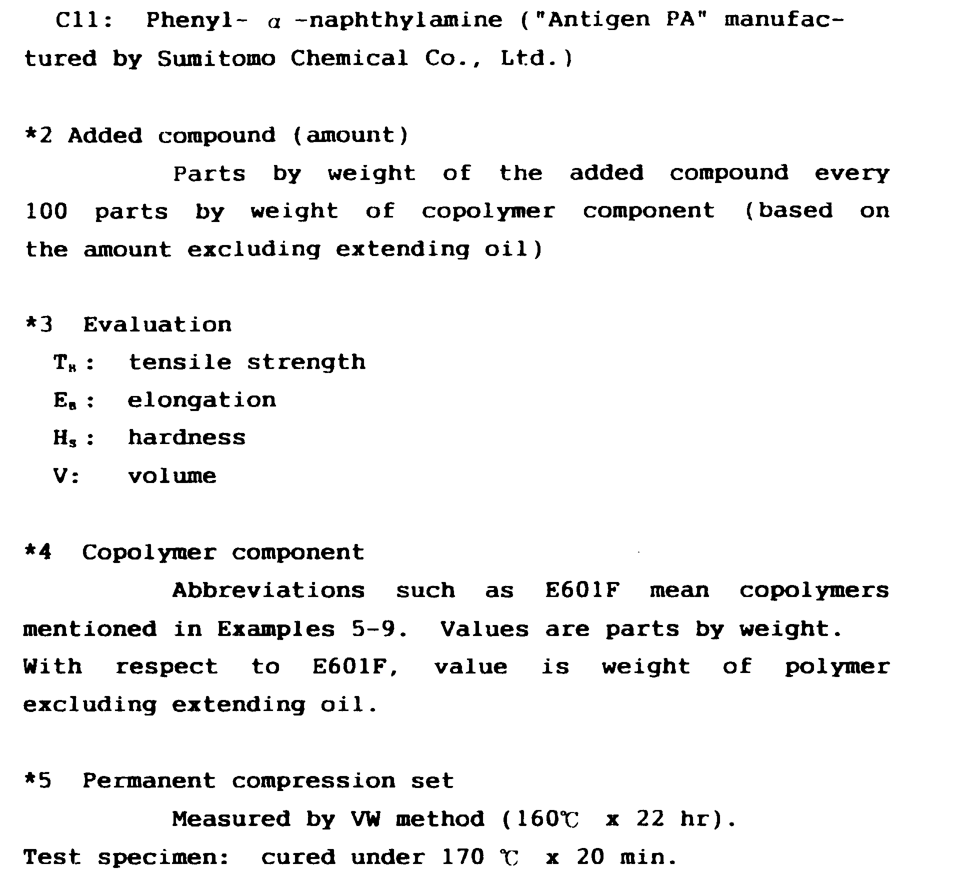

As explained above, the present invention provides a radiator hose, which comprises an ethylene-α-olefin copolymer rubber or an ethylene- α -olefin-nonconjugated diene copolymer rubber as a rubber component, which exhibits excellent age-resisting property without using a zinc-containing compound which accompanies with serious problems aforementioned.

## Claims

1. A radiator hose obtainable by vulcanization of a rubber composition which comprises components (A) to (C) and no zinc-containing compound:
(A) an ethylene-α-olefin copolymer rubber and/or an ethylene-α-olefin-nonconjugated diene copolymer rubber,
(B) one or more of N,N'-bis[3-(3,5-di-tert-butyl-4-hydroxyphenyl)propionyl]hydrazine, N,N'-dibenzal-(oxalyl dihydrazide) and 2,2'-oxamid-bis-[ethyl-3-(3,5-di-tert-butyl-4-hydroxyphenyl)propionate], alone or in combination and
(C) carbon black
and optionally further comprises component (D) an ethylene-(meth)acrylate ester copolymer.

2. A radiator hose according to claim 1 wherein component (A) comprises residues of propylene, 1-butene, 1-hexene, 4-methyl-1-pentene, 1-octene or 1-decene.

3. A radiator hose according to claim 1 or claim 2 wherein component (A) is a nonconjugated diene copolymer comprising residues of 1,4-hexadiene, 1,6-octadiene, 2-methyl-1,5-hexadiene, 6-methyl-1,5-heptadiene, 7-methyl-1,6-octadiene, cyclohexadiene, dicyclopentadiene, methyltetrahydoindene, 5-vinylnorbornene, 5-ethylidene-2-norbornene, 5-methylene-2-norbornene, 5-isopropylidene-2-norbornene, 6-chloromethyl-5-isopropenyl-2-norbornene, 2,3-diisopropylidene-5-norbornene, 2-ethylidene-3-isopropylidene-5-norbornene 2-propenyl-2,2-norbornadiene, 1,3,7-octatrienene or 1,4,9-decatoriene.

4. A radiator hose according to any one of claims 1 to 3 wherein the ethylene-α-olefin copolymer rubber or ethylene-α-olefin-nonconjugated diene copolymer rubber of component (A) has an ethylene content of 30 to 80 wt%.

5. A radiator hose according to claim 4 wherein the ethylene-α-olefin copolymer rubber or ethylene-α-olefin-nonconjugated diene copolymer rubber has an ethylene content of 40 to 70 wt%.

6. A radiator hose according to any one of claims 1 to 5 wherein component (A) comprises an ethylene-α-olefin-nonconjugated diene copolymer rubber having an iodine value of 1 to 40.

7. A radiator hose according to any one of claims 1 to 6 comprising 0.1 to 10 parts by weight of component (B) per 100 parts by weight of (A) to (D) above.

8. A radiator hose according to claim 7 comprising 0.3 to 6 parts by weight of component (B) per 100 parts by weight of components (A) to (D) above.

9. A radiator hose according to any one of claims 1 to 8 comprising 10 to 200 parts by weight of carbon black per 100 parts by weight of components (A) to (D) above.

10. A radiator hose according to claim 9 comprising 40 to 140 parts by weight of carbon black per 100 parts by weight of components (A) to (D) above.

11. A process of producing a radiator hose as defined in any one of claims 1 to 10 above, which process comprises
(a) mixing and kneading components (A) to (C), optionally with component (D) so as to form a mixture containing no zinc-containing compounds
(b) vulcanizing the mixture and
(c) shaping the vulcanized product of step (b).

## Patentansprüche

1. Kraftfahrzeug-Kühlwasserschlauch, der erhalten werden kann durch Vulkanisieren einer Kautschukzusammensetzung, umfassend die Bestandteile (A) bis (C) und keine zinkhaltige Verbindung:
(A) ein Ethylen-α-Olefin-Copolymerkautschuk und/oder ein Ethylen-α-Olefin-nichtkonjugiertes Dien-Copolymerkautschuk,
(B) wenigstens eine Verbindung aus der Gruppe N,N'-Bis [3-(3,5-di-tert-butyl-4-hydroxyphenyl)-propionyl]hydrazin, N,N'-Dibenzal-(oxalyldihydrazid) und 2,2'-Oxamid-bis[ethyl-3-(3,5-di-tert-butyl-4-hydroxyphenyl)propionat], allein oder in Kombination, und
(C) Ruß
und gegebenenfalls ferner umfassend Bestandteil (D), ein Ethylen(meth)acrylatester-Copolymer.

2. Kraftfahrzeug-Kühlwasserschlauch nach Anspruch 1, wobei Bestandteil (A) Propylen-, 1-Buten-; 1-Hexen-, 4-Methyl-1-penten-, 1-Octen- oder 1-Decenreste umfaßt.

3. Kraftfahrzeug-Kühlwasserschlauch nach Anspruch 1 oder 2, wobei Bestandteil (A) ein nichtkonjugiertes Dien-Copolymer ist, umfassend 1,4-Hexadien-, 1,6-Octadien-, 2-Methyl-1,5-hexadien-, 6-Methyl-1,5-heptadien-, 7-Methyl-1,6-octadien-, Cyclohexadien-, Dicyclopentadien-, Methyltetrahydroinden-, 5-Vinylnorbornen-, 5-Ethyliden-2-norbornen-, 5-Methylen-2-norbornen-, 5-Isopropyliden-2-norbornen-, 6-Chlormethyl-5-isopropenyl-2-norbornen-, 2,3-Diisopropyliden-5-norbornen-, 2-Ethyliden-3-isopropyliden-5-norbornen-, 2-Propenyl-2,2-norbornadien-, 1,3,7-Octatrienen- oder 1,4,9-Decatrienreste.

4. Kraftfahrzeug-Kühlwasserschlauch nach einem der Ansprüche 1 bis 3, wobei der Ethylen-α-Olefin-Copolymerkautschuk oder der Ethylen-α-Olefin-nichtkonjugiertes Dien-Copolymerkautschuk des Bestandteils (A) einen Ethylengehalt von 30 bis 80 Gewichts% aufweist.

5. Kraftfahrzeug-Kühlwasserschlauch nach Anspruch 4, wobei der Ethylen-α-Olefin-Copolymerkautschuk oder der Ethylen-α-Olefin-nichtkonjugiertes Dien- Copolymerkautschuk einen Ethylengehalt von 40 bis 70 Gewichts-% aufweist.

6. Kraftfahrzeug-Kühlwasserschlauch nach einem der Ansprüche 1 bis 5, wobei der Bestandteil (A) einen Ethylen-α-Olefin-nichtkonjugiertes Dien-Copolymerkautschuk mit einer Iodzahl von 1 bis 40 umfaßt.

7. Kraftfahrzeug-Kühlwasserschlauch nach einem der Ansprüche 1 bis 6, umfassend 0,1 bis 10 Gewichtsteile des Bestandteils (B) je 100 Gewichtsteilen an vorstehenden Bestandteilen (A) bis (D).

8. Kraftfahrzeug-Kühlwasserschlauch nach Anspruch 7, umfassend 0,3 bis 6 Gewichtsteile des Bestandteils (B) je 100 Gewichtsteilen an vorstehenden Bestandteilen (A) bis (D).

9. Kraftfahrzeug-Kühlwasserschlauch nach einem der Ansprüche 1 bis 8, umfassend 10 bis 200 Gewichtsteile Ruß je 100 Gewichtsteilen an vorstehenden Bestandteilen (A) bis (D).

10. Kraftfahrzeug-Kühlwasserschlauch nach Anspruch 9. umfassend 40 bis 140 Gewichtsteile Ruß je 100 Gewichtsteilen an vorstehenden Bestandteilen (A) bis (D).

11. Verfahren zur Herstellung eines Kraftfahrzeug-Kühlwasserschlauchs, nach einem der vorstehenden Ansprüche 1 bis 10, umfassend:
(a) Mischen und Kneten der Bestandteile (A) bis (C), gegebenenfalls mit Bestandteil (D), um ein Gemisch zu erzeugen, das keine zinkhaltigen Verbindungen enthält
(b) Vulkanisieren des Gemischs und
(c) Formen des vulkanisierten Produkts aus Schritt (b).

## Revendications

1. Tuyau flexible pour radiateur pouvant être obtenu par vulcanisation d'une composition de caoutchouc qui comprend les constituants (A) à (C) et ne contient pas de composé contenant du zinc :
(A) un caoutchouc de copolymère éthylène-oléfine α et/ou un caoutchouc de copolymère éthylène-oléfine α-diène non conjugué,
(B) un ou plusieurs des composés N,N'-bis-[3-(3,5-di-tert-butyl-4-hydroxyphényl)propionyl]hydrazine, N,N'-dibenzal(dihydrazide d'oxalyle) et 2,2'-oxamide-bis-[3-(3,5-di-tert-butyl-4-hydroxyphényl)-propionate d'éthyle], seul ou en association et
(C) du noir de carbone et comprend facultativement un constituant (D), qui est un copolymère éthylène-ester (méth)acrylique.

2. Tuyau flexible pour radiateur selon la revendication 1, dans lequel le constituant (A) comprend des radicaux du propylène, du 1-butène, du 1-hexène, du 4-méthyl-1-pentène ou du 1-octène ou du 1-décène.

3. Tuyau flexible pour radiateur selon la revendication 1 ou 2, dans lequel le constituant (A) est un copolymère de diène non conjugué comprenant des radicaux du 1,4-hexadiène, du 1,6-octadiène, du 2-méthyl-1,5-hexadiène, du 6-méthyl-1,5-heptadiène, du 7-méthyl-1,6-octadiène, du cyclohexadiène, du dicyclopentadiène, du méthyltétrahydroindène, du 5-vinylnorbornène, du 5-éthylidène-2-norbornène, du 5-méthylène-2-norbornène, du 5-isopropylidène-2-norbornène, du 6-chlorométhyl-5-isopropényl-2-norbornène, du 2,3-diisopropylidène-5-norbornène, du 2-éthylidène-3-isopropylidène-5-norbornène, du 2-propényl-2,2-norbornadiène, du 1,3,7-octatriène ou du 1,4,9-décatriène.

4. Tuyau flexible pour radiateur selon l'une quelconque des revendications 1 à 3, dans lequel le caoutchouc de copolymère éthylène-oléfine α ou le caoutchouc de copolymère éthylène-oléfine α-diène non conjugué du constituant (A) a une teneur en éthylène de 30 à 80 % en poids.

5. Tuyau flexible pour radiateur selon la revendication 4, dans lequel le caoutchouc de copolymère éthylène-oléfine α ou le caoutchouc de copolymère éthylène-oléfine α-diène non conjugué a une teneur en éthylène de 40 à 70 % en poids.

6. Tuyau flexible pour radiateur selon l'une quelconque des revendications 1 à 5, dans lequel le constituant (A) comprend un caoutchouc de copolymère éthylène-oléfine α-diène non conjugué ayant un indice d'iode de 1 à 40.

7. Tuyau flexible pour radiateur selon l'une quelconque des revendications 1 à 6, comprenant 0,1 à 10 parties en poids de constituant (B) pour 100 parties en poids des constituants (A) à (D) ci-dessus.

8. Tuyau flexible pour radiateur selon la revendication 7, comprenant 0,3 à 6 parties en poids du constituant (B) pour 100 parties en poids des constituants (A) à (D) ci-dessus.

9. Tuyau flexible pour radiateur selon l'une quelconque des revendications 1 à 8, comprenant 10 à 200 parties en poids de noir de carbone pour 100 parties en poids des constituants (A) à (D) ci-dessus.

10. Tuyau flexible pour radiateur selon la revendication 9, comprenant 40 à 140 parties en poids de noir de carbone pour 100 parties en poids des constituants (A) à (D) ci-dessus.

11. Procédé de production d'un tuyau flexible pour radiateur tel que défini dans l'une quelconque des revendications 1 à 10 ci-dessus, lequel procédé comprend :
(a) le mélange et le malaxage des constituants (A) à (C), éventuellement avec le constituant (D) afin de former un mélange contenant des composés ne contenant pas du zinc,
(b) la vulcanisation du mélange et
(c) le façonnage du produit vulcanisé de l'étape (b).
